(19) Europäisches Patentamt / European Patent Office / Office européen des brevets

(11) **EP 1 510 649 B1**

(12) **FASCICULE DE BREVET EUROPEEN**

(45) Date de publication et mention de la délivrance du brevet:
**09.03.2011 Bulletin 2011/10**

(51) Int Cl.:
*E06B 9/68* (2006.01)      *E06B 9/82* (2006.01)
*G05B 19/40* (2006.01)

(21) Numéro de dépôt: **04018887.2**

(22) Date de dépôt: **10.08.2004**

(54) **Procédé d'initialisation d'un volet roulant**

Verfahren zur Initialisierung eines Rollladens

Method of initialising a roller blind

(84) Etats contractants désignés:
**AT BE BG CH CY CZ DE DK EE ES FI FR GB GR HU IE IT LI LU MC NL PL PT RO SE SI SK TR**

(30) Priorité: **18.08.2003 FR 0309991**

(43) Date de publication de la demande:
**02.03.2005 Bulletin 2005/09**

(73) Titulaire: **Somfy SAS**
**74300 Cluses (FR)**

(72) Inventeurs:
• **Bruno, Serge**
**74460 Marnaz (FR)**
• **Bontemps, Anne**
**74440 Mieussy (FR)**

(74) Mandataire: **Bugnion Genève**
**Bugnion S.A.**
**Conseils en Propriété Industrielle**
**Case Postale 375**
**1211 Genève 12 (CH)**

(56) Documents cités:
**EP-A- 1 111 485      EP-A- 1 122 404**
**EP-B- 0 574 637      EP-B- 0 871 101**

**Description**

L'invention se rapporte à un procédé d'initialisation d'un dispositif comprenant un écran destiné à se déplacer entre deux positions extrêmes, un actionneur susceptible d'entraîner l'écran à deux vitesses différentes et une unité de commande comprenant une horloge mesurant les durées de déplacement de l'écran, une mémoire et une unité logique de traitement et pilotant l'actionneur. L'invention concerne également un dispositif destiné à mettre en oeuvre ce procédé.

Il est courant de disposer des volets roulants au niveau des ouvertures des habitations, ayant des fonctions de protection solaire, d'assombrissement et de sécurité contre les intrusions.

L'installation et le contrôle du mouvement de ces volets roulants sont assez complexes et requièrent les services d'une personne qualifiée.

Les procédures d'installation visent à définir et éventuellement à mémoriser les positions extrêmes supérieure et inférieure au niveau desquelles le volet roulant doit, en fonctionnement, automatiquement arrêter sa course.

Les positions extrêmes supérieure et inférieure, ou fins de course, peuvent être détectées par exemple par des capteurs de position, par comptage de la position du volet (par roue codeuse par exemple), par lecture du courant en valeur absolue, par calcul de temporisation ou par une détection de surcouple combinée avec une butée.

Cette dernière solution est particulièrement avantageuse en terme de coût, mais elle occasionne des contraintes sur le volet roulant et sur sa chaîne cinématique d'entraînement.

Dans le cas de la gestion des fins de course par temporisation, le fonctionnement du volet roulant est dépendant des valeurs maximales de course mémorisées au cours de l'initialisation. Il est donc important que ces valeurs soient précises.

Des procédés de contrôle du mouvement d'un volet roulant associant une détection de surcouple pour la détection des fins de course et une localisation du volet par temporisation sont connus de l'art antérieur (cf. par exemple EP 1 111 485).

Le brevet EP 0 574 637 décrit un procédé de commande d'un volet roulant basé sur les temps de parcours. Dans une procédure d'initialisation, le volet est déplacé vers la première fin de course puis vers la seconde fin de course. La durée de déplacement étant mesurée entre les deux fins de course. Une procédure de réinitialisation est prévue après un nombre défini de déplacements du volet pour éviter les dérives de position.

Ce procédé est basé sur l'hypothèse que le déplacement du volet obéit à une loi bien établie de proportionnalité. Cependant, dans la pratique, la loi position du volet/temps d'activation de l'actionneur est complexe, et le procédé proposé ne permet donc pas un arrêt précis au niveau des positions extrêmes. Ce qui justifie la procédure de réinitialisation après un nombre défini de déplacement du volet. Ce procédé présente l'inconvénient de provoquer des contraintes importantes sur le volet ou sa chaîne cinématique d'entraînement lors des procédures d'initialisation.

La demande de brevet EP 1 122 404 propose un procédé de commande de volet roulant dans lequel, le temps de montée et le temps de descente du volet sont mesurés dans une phase d'initialisation, par détection de surcouple à l'arrivée en butée. A chacun de ces temps mesurés est soustraite une quantité déterminée, et le résultat est mis en mémoire. Ainsi, le mouvement du volet roulant est contrôlé en fonction du temps d'activation et il n'atteint en principe plus les butées haute et basse. La détection de surcouple active en permanence permet de détecter des obstacles ou des dérives trop importantes. Bien que le but du procédé soit de réduire les occasions de provoquer des contraintes sur le volet ou sa chaîne cinématique, ces évènements sont encore fréquents notamment lors des phases d'initialisation ou de réinitialisation.

Le but de l'invention est de fournir un procédé permettant de pallier aux problèmes cités et améliorant les procédés connus de l'art antérieur. L'invention propose en particulier un procédé d'initialisation permettant de minimiser les contraintes exercées sur le volet ou sa chaîne cinématique lors des phases d'initialisation ou de réinitialisation.

Le procédé d'initialisation selon l'invention est caractérisé en ce qu'il comprend au moins les étapes suivantes dans cet ordre :

- déplacement de l'écran dans un premier sens à vitesse rapide pendant une première durée telle que l'écran n'atteint pas une première position extrême,
- déplacement de l'écran dans le premier sens à vitesse lente jusqu'à atteindre la première position extrême,
- déplacement de l'écran dans un deuxième sens à vitesse rapide pendant une deuxième durée telle que l'écran n'atteint pas la deuxième position extrême,
- déplacement de l'écran dans le deuxième sens à vitesse lente jusqu'à atteindre la deuxième position extrême,
- déplacement de l'écran dans le premier sens à vitesse rapide pendant la première durée,
- déplacement de l'écran dans le premier sens à vitesse lente jusqu'à atteindre la première position extrême,
- calcul des temps nécessaires pour parcourir la totalité de la course à vitesse rapide entre les deux positions extrêmes dans le premier sens et dans le deuxième sens.

Différents modes d'exécution du procédé sont définis par les revendications dépendantes 2 à 10.

Le dispositif pour la mise en oeuvre du procédé précédent comprend un écran destiné à se déplacer entre deux positions extrêmes, un actionneur susceptible d'entraîner l'écran à deux vitesses différentes et une unité de commande comprenant une horloge mesurant les durées de déplacement de l'écran, une mémoire et une unité logique de traitement et pilotant l'actionneur. Il est caractérisé en ce que l'unité logique de traitement comprend des moyens de mise en oeuvre du procédé précédent.

Le dessin annexé représente, à titre d'exemples, trois modes d'exécution du procédé d'initialisation selon l'invention.

La figure 1 est un schéma d'un dispositif d'écran motorisé permettant la mise en oeuvre du procédé selon l'invention.

La figure 2 est un schéma illustrant un premier mode d'exécution du procédé selon l'invention.

La figure 3 est un schéma illustrant un deuxième mode d'exécution du procédé selon l'invention.

La figure 4 est un schéma illustrant un troisième mode d'exécution du procédé selon l'invention.

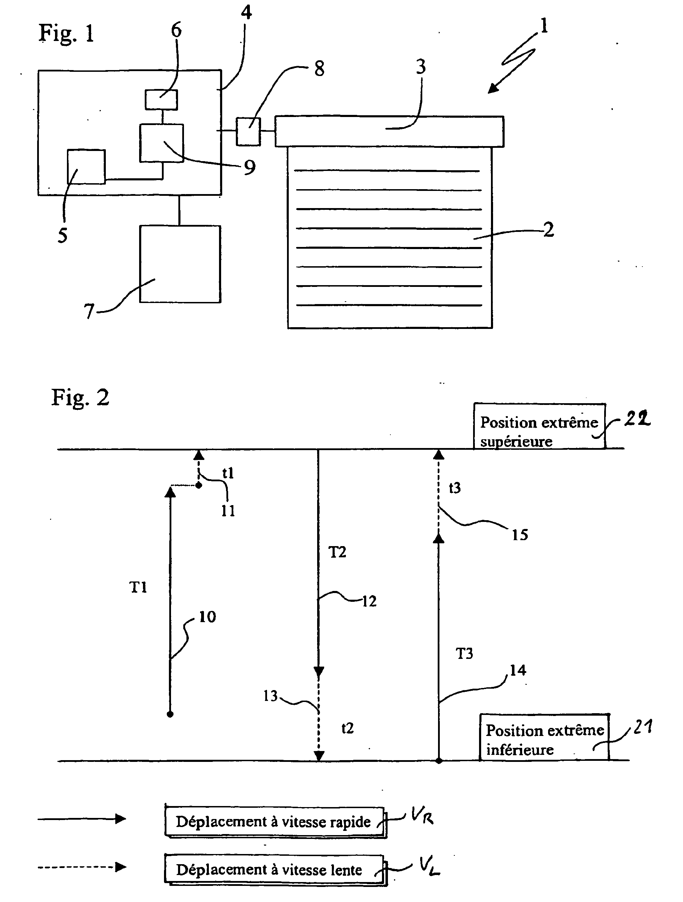

Le procédé selon l'invention s'applique à un dispositif 1 d'écran motorisé représenté à la figure 1 et comprenant principalement un élément mobile 2 destiné à être déplacé entre deux positions extrêmes par un actionneur électrique 3. Le dispositif d'écran 1 peut par exemple consister en un volet roulant ou en une porte de garage.

L'actionneur 3 est piloté par une unité de commande 4 comprenant une unité logique de traitement 9, une mémoire 5 et une horloge 6. L'actionneur 3 est par exemple un moteur à courant continu. Le dispositif comprend également des moyens 8 de détection de fin de course fonctionnant préférentiellement par mesure du couple fourni par l'actionneur. Une commande de déplacement de l'élément mobile d'un point à un autre est traduit par une durée d'activation de l'actionneur.

Dans le premier mode d'exécution du procédé représenté à la figure 2, l'utilisateur ou l'installateur, ayant préalablement positionné l'écran dans une position proche de sa position extrême inférieure 21, exerce une action sur un émetteur d'ordres ou sur le dispositif d'écran pour déclencher une procédure automatique de détermination automatique des positions extrêmes supérieure et inférieure.

Dans cette procédure automatique, lors d'une première étape, l'actionneur est activé à vitesse rapide $V_R$ pendant une durée T1 dans le sens du déplacement de l'écran vers le haut. Cette durée T1 est par exemple une valeur stockée dans la mémoire du dispositif et dépend notamment du type d'actionneur, du type d'écran et de la longueur de la course entre les positions extrêmes supérieure et inférieure. Ce déplacement, représenté par la flèche 10, prend fin avant que l'écran n'atteigne sa position extrême supérieure 22. Cette première étape peut aussi être effectuée manuellement.

Lors d'une seconde étape, l'actionneur est activé à vitesse lente $V_L$ dans le sens du déplacement de l'écran vers le haut jusqu'à ce que ce dernier arrive dans sa position extrême supérieure 22 dans laquelle il est en contact avec une butée. Ce contact est détecté au niveau du moyen 8 de détection de fin de course. La durée t1 durant laquelle l'actionneur a été activé à vitesse lente $V_L$ est alors enregistrée en mémoire. Ce déplacement à vitesse lente $V_L$ est représenté par la flèche 11.

Lors d'une troisième étape, l'actionneur est activé à vitesse rapide $V_R$ pendant une durée T2 = $\alpha \times$ T1 dans le sens du déplacement de l'écran vers le bas. Cette durée T2 est une valeur déduite de la durée T1 par multiplication par une valeur $\alpha$. Toutefois, la durée T2 peut être déduite de la durée T1 par une relation mathématique plus complexe. La relation mathématique peut dépendre notamment du type d'actionneur, du type d'écran et de la longueur de la course entre les positions extrêmes supérieure et inférieure. Elle permet de tenir compte de la différence de vitesse de déplacement de l'écran lors de la descente et lors de la montée, pour être certain de ne pas atteindre les butées. On pourra par exemple choisir $\alpha$ selon le sens du premier déplacement ($\alpha$=0,75 pour un premier sens de déplacement vers le haut ou $\alpha$=1 pour un premier sens de déplacement vers le bas).

Ce déplacement, représenté par la flèche 12, prend fin avant que l'écran n'atteigne sa position extrême inférieure 21.

Lors d'une quatrième étape, l'actionneur est activé à vitesse lente $V_L$ dans le sens du déplacement de l'écran vers le bas jusqu'à ce que ce dernier arrive dans sa position extrême inférieure dans laquelle il est en contact avec une butée. Ce contact est détecté au niveau du moyen 8 de détection de fin de course. La durée t2 durant laquelle l'actionneur a été activé à vitesse lente $V_L$ est alors enregistrée en mémoire. Ce déplacement à vitesse lente $V_L$ est représenté par la flèche 13.

Lors d'une cinquième étape, l'actionneur est activé à vitesse rapide $V_R$ pendant une durée T3 dans le sens du déplacement de l'écran vers le haut. Cette durée T3 vaut :

$$T3 = T1 + \frac{V_L}{V_R} \times t1$$

Ce déplacement, représenté par la flèche 14, prend fin avant que l'écran n'atteigne sa position extrême supérieure.

Lors d'une sixième étape, l'actionneur est activé à vitesse lente $V_L$ dans le sens du déplacement de l'écran vers le haut jusqu'à ce que ce dernier arrive dans sa position extrême supérieure 22 dans laquelle il est en contact avec une butée. Ce contact est détecté au niveau du moyen 8 de détection de fin de course. La durée t3 durant laquelle l'actionneur a été activé à vitesse lente $V_L$ est alors enregistrée en mémoire. Ce déplacement à vitesse lente $V_L$ est représenté par la flèche 15.

A l'issue de ces différentes étapes, les temps de montée $(Tmont)_R$ et de descente $(Tdesc)_R$ à vitesse rapide $V_R$ sont calculés grâce aux formules :

$$(Tmont)_R = T1 + \frac{V_L}{V_R} \times t1 + \frac{V_L}{V_R} \times t3$$

$$(Tdesc)_R = \alpha \times T1 + \frac{V_L}{V_R} \times t2$$

Lors de l'initialisation, il est important que les valeurs calculées soient très précises : il faut donc s'affranchir au maximum des variables qui entrent dans le calcul : en effet, le rapport de proportionnalité entre la vitesse rapide $V_R$ et la vitesse lente $V_L$ est très sensible aux variations de température et de tension.

Le procédé d'initialisation conduit à des calculs d'autant plus précis que le premier temps T1 de parcours est proche du temps de parcours maximal, puisque dans ce cas, les valeurs mesurées à vitesse lente sont faibles par rapport aux valeurs mesurées à vitesse rapide.

Lors de la troisième étape l'actionneur pourrait également être activé pendant une durée tenant compte des durées T1 et t1.

Il aurait également pu être envisagé de réaliser l'ensemble des déplacements du procédé d'initialisation à vitesse lente, puis de convertir les valeurs de temps mesurées en valeurs de temps correspondant à la vitesse rapide. Outre la durée nécessaire pour effectuer une telle procédure, une vitesse lente implique une sous-alimentation du moteur et par conséquent, un risque de ne pas fournir le couple nécessaire pour soulever l'écran quand celui-ci parvient dans sa position de charge maximum. L'arrêt de l'écran pourrait alors être considéré comme une arrivée en butée et l'initialisation serait basée sur des temps de parcours erronés.

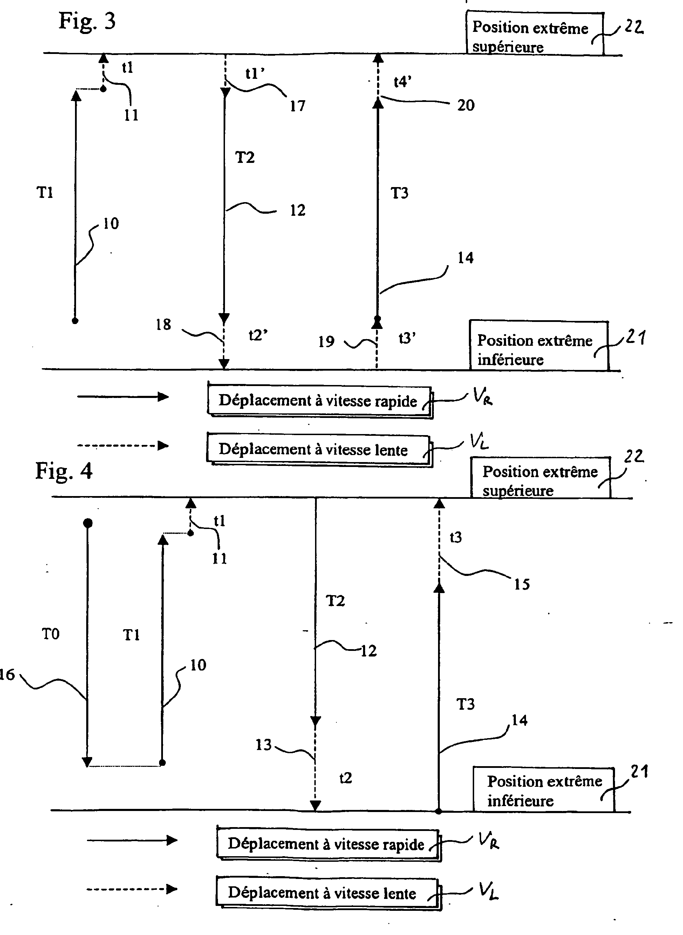

Dans un deuxième mode d'exécution représenté à la figure 3, on pourrait également envisager de faire précéder le mouvement à vitesse rapide $V_R$ (représenté par la flèche 12), par un mouvement à vitesse lente d'une durée t1'= $\alpha \times$ t2' (représenté par la flèche 17).

La durée t2' mesurée pendant le déplacement à vitesse lente $V_L$ représenté par la flèche 18 tient alors compte du déplacement à vitesse lente représenté par la flèche 17.

De même, le déplacement dans le sens suivant peut être débuté par un déplacement à vitesse lente représenté par la flèche 19, d'une durée égale à $t3' = \dfrac{t2'}{\alpha}$.

La durée t4' mesurée pendant le déplacement à vitesse lente de l'écran représenté par la flèche 20 tient également compte du déplacement à vitesse lente représenté par la flèche 19.

Les temps de montée $(Tmont)_R$ et de descente $(Tdesc)_R$ à vitesse rapide $V_R$ sont alors calculés grâce aux formules :

$$(Tmont)_R = T1 + \frac{V_L}{V_R} \times t1 + \frac{V_L}{V_R} \times \left( \frac{t2'}{\alpha} + t3' \right)$$

$$\left(Tdesc\right)_R = \alpha \times T1 + \frac{V_L}{V_R} \times \left(t1'+t2'\right)$$

Un troisième mode d'exécution du procédé, représenté à la figure 4, diffère du premier mode d'exécution décrit en ce qu'il comprend une étape préalable réalisée après que l'utilisateur ou l'installateur a amené l'écran dans une position proche de sa position extrême supérieure 22. Cette étape préalable est une activation de l'actionneur à vitesse rapide $V_R$ dans le sens de la descente de l'écran pendant une durée T0 telle que l'écran n'atteint pas sa position extrême inférieure 21. Ce déplacement est représenté par une flèche 16. Ce déplacement est effectué manuellement sous contrôle de l'utilisateur ou de l'installateur.

$$T1 = \frac{T0}{\alpha} \text{ et } T2 = T0.$$

Les déplacements des étapes 1 à 6 décrites dans le premier mode d'exécution sont ensuite exécutés automatiquement les uns après les autres. L'ordre déclenchant la manoeuvre consécutive au déplacement représenté par la flèche 16, est un ordre de déplacement dans le sens inverse au dernier déplacement de l'écran. Cet ordre déclenche l'initialisation automatique. Toute la procédure se déroule alors sans aucune intervention de l'utilisateur.

Ce dernier mode d'exécution peut également reprendre les étapes décrites dans le deuxième mode d'exécution.

Bien entendu, l'ensemble des manoeuvres peut être accompli dans le sens inverse à celui décrit et représenté sur les figures.

**Revendications**

1. Procédé d'initialisation d'un dispositif (1) comprenant un écran (2) destiné à se déplacer entre deux positions extrêmes, un actionneur (3) susceptible d'entraîner l'écran à deux vitesses différentes et une unité de commande (4) comprenant une horloge (6) mesurant les durées de déplacement de l'écran, une mémoire (5) et une unité logique de traitement (9) et pilotant l'actionneur, **caractérisé en ce qu'**il comprend au moins les étapes suivantes dans cet ordre ;

   - déplacement de l'écran dans un premier sens à vitesse rapide pendant une première durée telle que l'écran n'atteint pas une première position extrême,
   - déplacement de l'écran dans le premier sens à vitesse lente - jusqu'à atteindre la première position extrême,
   - déplacement de l'écran dans un deuxième sens à vitesse rapide pendant une deuxième durée telle que l'écran n'atteint pas la deuxième position extrême,
   - déplacement de l'écran dans le deuxième sens à vitesse lente jusqu'à atteindre la deuxième position extrême,
   - déplacement de l'écran dans le premier sens à vitesse rapide pendant la première durée,
   - déplacement de l'écran dans le premier sens à vitesse lente - jusqu'à atteindre la première position extrême,
   - calcul des temps nécessaires pour parcourir la totalité de la course à vitesse rapide entre les deux positions extrêmes dans le premier sens et dans le deuxième sens.

2. Procédé d'initialisation selon la revendication 1, **caractérisé en ce qu'**il comprend préalablement aux différentes étapes un déplacement de l'écran dans le deuxième sens à vitesse rapide pendant une durée telle que l'écran n'atteint pas la deuxième position extrême.

3. Procédé d'initialisation selon l'une des revendications 1 à 2, **caractérisé en ce que** la durée du deuxième déplacement à vitesse rapide est déduite de la durée du premier déplacement à vitesse rapide par une relation mathématique.

4. Procédé d'initialisation selon l'une des revendications précédentes, **caractérisé en ce que** le premier déplacement se fait sous contrôle d'un opérateur.

5. Procédé d'initialisation selon la revendication précédente, **caractérise en ce que** le premier déplacement est commandé par une action manuelle de type homme-mort.

**6.** Procédé d'initialisation selon l'une des revendications 4 ou 5, **caractérisé en ce que** les déplacements suivants sont réalisés automatiquement.

**7.** Procédé d'initialisation selon la revendication 6, **caractérisé en ce que** les déplacements automatiques sont déclenchés par un ordre de mise en mouvement de l'écran.

**8.** Procédé d'initialisation selon la revendication 6, **caractérisé en ce que** les déplacements automatiques sont déclenchés par un ordre spécifique.

**9.** Procédé d'initialisation selon l'une des revendications précédentes, **caractérisé en ce que** les positions extrêmes sont détectées par mesure d'un surcouple de l'actionneur.

**10.** Procédé d'initialisation selon l'une des revendications précédentes, **caractérisé en ce que** le premier déplacement de l'écran est sensiblement aussi long que la course de l'écran.

**11.** Dispositif (1) comprenant un écran (2) destiné à se déplacer entre deux positions extrêmes, un actionneur (3) susceptible d'entraîner l'écran (2) à deux vitesses différentes et une unité de commande (4) comprenant une horloge (6) mesurant les durées de déplacement de l'écran, une mémoire (5) et une unité logique de traitement (9) et pilotant l'actionneur, **caractérisé en ce que** l'unité logique de traitement (9) comprend des moyens de mise en oeuvre du procédé selon l'une des revendications précédentes.

**Claims**

**1.** A process for initializing a device (1) comprising a screen (2) designed to move between two extreme positions, an actuator (3) capable of driving the screen at two different speeds, and a control unit (4) comprising a clock (6) that measures for how long the screen is in movement, a memory (5), and a logic processing unit (9) controlling the actuator, which process comprises at least the following steps in this order:

- moving the screen in a first direction at fast speed for a first duration such that the screen does not reach a first extreme position,
- moving the screen in the first direction at slow speed until it reaches the first extreme position,
- moving the screen in a second direction at fast speed for a second duration such that the screen does not reach the second extreme position,
- moving the screen in the second direction at slow speed until it reaches the second extreme position,
- moving the screen in the first direction at fast speed for the first duration,
- moving the screen in the first direction at slow speed until it reaches the first extreme position, and
- calculating the times needed to cover the full travel at fast speed between the two extreme positions in the first direction and in the second direction.

**2.** The initialization process as claimed in claim 1, which includes, before the various steps, moving the screen in the second direction at fast speed for a duration such that the screen does not reach the second extreme position.

**3.** The initialization process as claimed in one of claims 1 to 2, in which the duration of the second fast-speed movement is deduced from the duration of the first fast-speed movement by a mathematical relation.

**4.** The initialization process as claimed in one of the preceding claims, in which the first movement is performed under the control of an operator.

**5.** The initialization process as claimed in the preceding claim, in which the first movement is controlled by a deadman type of manual action.

**6.** The initialization process as claimed in one of claims 4 and 5, in which the subsequent movements are performed automatically.

**7.** The initialization process as claimed in claim 6, in which the automatic movements are initiated by a command to start the screen moving.

8. The initialization process as claimed in claim 6, in which the automatic movements are initiated by a specific command.

9. The initialization process as claimed in one of the preceding claims, in which the extreme positions are detected by measuring an overtorque of the actuator.

10. The initialization process as claimed in one of the preceding claims, in which the first movement of the screen is approximately as long as the travel of the screen.

11. A device (1) comprising a screen (2) designed to move between two extreme positions, an actuator (3) capable of driving the screen (2) at two different speeds, and a control unit (4) comprising a clock (6) that measures for how long the screen is in movement, a memory (5), and a logic processing unit (9) controlling the actuator, in which the logic processing unit (9) comprises means for carrying out the process as claimed in one of the preceding claims.


**Patentansprüche**

1. Verfahren zur Initialisierung einer Vorrichtung (1), welche einen Schirm (2) aufweist, der dazu bestimmt ist, sich zwischen zwei Endstellungen zu bewegen, eine Antriebsvorrichtung (3) zum Antrieb des Schirms mit zwei unterschiedlichen Geschwindigkeiten, und eine Steuereinheit (4) mit einer Uhr (6) zur Messung der Bewegungsdauer des Schirms, einen Speicher (5) sowie eine Logik-Verarbeitungseinheit (9) zum Steuern der Antriebsvorrichtung, **dadurch gekennzeichnet, dass** das Verfahren mindestens die folgenden Schritte in der angegebenen Reihenfolge enthält:

    - Verschiebung des Schirms in einer ersten Richtung mit hoher Geschwindigkeit und während einer solchen ersten Zeitdauer, dass der Schirm eine erste Endstellung nicht erreicht;
    - Verschiebung des Schirms in einer ersten Richtung mit niedriger Geschwindigkeit bis zum Erreichen der ersten Endstellung;
    - Verschiebung des Schirms in einer zweiten Richtung mit hoher Geschwindigkeit und während einer solchen zweiten Zeitdauer, dass der Schirm die zweite Endstellung nicht erreicht;
    - Verschiebung des Schirm in der zweiten Richtung mit niedriger Geschwindigkeit bis zum Erreichen der zweiten Endstellung;
    - Verschiebung des Schirms in der ersten Richtung mit hoher Geschwindigkeit während der ersten Zeitdauer;
    - Verschiebung des Schirms in der ersten Richtung mit niedriger Geschwindigkeit bis zum Erreichen der ersten Endstellung;
    - Berechnung der notwendigen Zeiten zum Durchlaufen des gesamten Verschiebungsweges mit hoher Geschwindigkeit zwischen den beiden Endstellungen in der ersten Richtung und in der zweiten Richtung.

2. Verfahren zur Initialisierung nach Anspruch 1, **dadurch gekennzeichnet, dass** vor den einzelnen Schritten eine Verschiebung des Schirms mit hoher Geschwindigkeit in der zweiten Richtung während einer solchen Zeitdauer vorgenommen wird, dass der Schirm die zweite Endstellung nicht erreicht.

3. Verfahren zur Initialisierung nach Anspruch 1 oder 2, **dadurch gekennzeichnet, dass** die Dauer der zweiten Verschiebung mit hoher Geschwindigkeit mittels einer mathematischen Beziehung von der Dauer der ersten Verschiebung mit hoher Geschwindigkeit abgezogen wird.

4. Verfahren zur Initialisierung nach einem der vorstehenden Ansprüche, **dadurch gekennzeichnet, dass** die erste Verschiebung unter der Kontrolle einer Bedienungsperson vorgenommen wird.

5. Verfahren zur Initialisierung nach einem der vorstehenden Ansprüche, **dadurch gekennzeichnet, dass** die erste Verschiebung nach Art eines Totmann-Betriebs manuell gesteuert wird.

6. Verfahren zur Initialisierung nach einem der Ansprüche 4 oder 5, **dadurch gekennzeichnet, dass** die folgenden Verschiebungen automatisch vorgenommen werden.

7. Verfahren zur Initialisierung nach Anspruch 6, **dadurch gekennzeichnet, dass** die automatischen Verschiebungen durch einen Befehl zur Bewegung des Schirms ausgelöst werden.

8. Verfahren zur Initialisierung nach Anspruch 6, **dadurch gekennzeichnet, dass** die automatischen Verschiebungen durch einen besonderen Befehl ausgelöst werden.

9. Verfahren zur Initialisierung nach einem der vorstehenden Ansprüche, **dadurch gekennzeichnet, dass** die Endstellungen durch Messung eines Überschussmoments der Antriebsvorrichtung ermittelt werden.

10. Verfahren zur Initialisierung nach einem der vorstehenden Ansprüche, **dadurch gekennzeichnet, dass** die erste Verschiebung des Schirms im Wesentlichen gleich lang wie der Verschiebungsweg des Schirms ist.

11. Vorrichtung (1), welche einen Schirm (2) aufweist, der dazu bestimmt ist, sich zwischen zwei Endstellungen zu bewegen, eine Antriebsvorrichtung (3) zum Antrieb des Schirms (2) mit zwei unterschiedlichen Geschwindigkeiten, und eine Steuereinheit (4) mit einer Uhr (6) zur Messung der Bewegungsdauer des Schirms, einen Speicher (5) sowie eine Logik-Verarbeitungseinheit (9) zum Steuern der Antriebsvorrichtung, **dadurch gekennzeichnet, dass** die Logik-Verarbeitungseinheit (9) Mittel zur Durchführung des Verfahrens nach einem der vorstehenden Ansprüche aufweist.

Fig. 1

Fig. 2

Position extrême supérieure — 22

Position extrême inférieure — 21

Déplacement à vitesse rapide — $V_R$

Déplacement à vitesse lente — $V_L$

## Fig. 3

Position extrême supérieure 22

t1 11
t1' 17
t4' 20

T2

T1

12

10

T3

14

18 t2'
19 t3'

Position extrême inférieure 21

→ Déplacement à vitesse rapide $V_R$

- - - → Déplacement à vitesse lente $V_L$

## Fig. 4

Position extrême supérieure 22

t1 11
t3 15

T2

T0 T1

12

16 10

13

T3 14

t2

Position extrême inférieure 21

→ Déplacement à vitesse rapide $V_R$

- - - → Déplacement à vitesse lente $V_L$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1111485 A
- EP 0574637 A
- EP 1122404 A